# EUROPÄISCHE PATENTSCHRIFT

(11) **EP 0 784 546 B1**
(45) Veröffentlichungstag und Bekanntmachung des Hinweises auf die Patenterteilung: **19.05.1999**
(21) Anmeldenummer: 95934129.8
(22) Anmeldetag: 04.10.1995
(51) Int. Cl.: B60K 31/04, B60R 16/02

(54) **VERFAHREN UND EINRICHTUNG ZUR BEGRENZUNG DER GESCHWINDIGKEIT EINES KRAFTFAHRZEUGES**
PROCESS AND DEVICE FOR LIMITING THE SPEED OF A MOTOR VEHICLE
PROCEDE ET DISPOSITIF PERMETTANT DE LIMITER LA VITESSE D'UN VEHICULE AUTOMOBILE

(30) Priorität: 06.10.1994 DE 4435705
(43) Veröffentlichungstag der Anmeldung: 23.07.1997
(73) Patentinhaber: Rössle, Manfred, 71640 Ludwigsburg (DE)
(72) Erfinder: Rössle, Manfred, 71640 Ludwigsburg (DE)
(74) Vertreter: Kastner, Hermann, Dipl.-Ing. Patentanwalt
(86) Internationale Anmeldenummer: EP9503905
(87) Internationale Veröffentlichungsnummer: WO9611122

(56) Entgegenhaltungen:
- FR-A- 2 533 513
- FR-A- 2 581 461
- US-A- 4 650 020
- US-A- 4 797 924
- PATENT ABSTRACTS OF JAPAN vol. 950 no. 005 & JP,A,07 137584 (FUJITSU TEN LTD) 30.Mai 1995,

## Beschreibung

Die Erfindung betrifft ein Verfahren und eine Einrichtung zur Begrenzung der Geschwindigkeit eines Kraftfahrzeugs.

Beim Lenken eines Kraftfahrzeuges, vor allem innerhalb geschlossener Ortschaften, werden an den Fahrzeuglenker sehr hohe Anforderungen gestellt. Er muß ständig das Verkehrsgeschehen beobachten und auf schnelle Veränderungen gefaßt sein, auf die er seine Fahrweise einstellen muß. Er muß daneben die Verkehrszeichen und Hinweisschilder beachten, was vor allem in fremden Ortsbereichen sehr schwierig sein kann, zumal wenn das Erkennen und Beachten von Verkehrsschildern hinzukommt. Schließlich soll der Fahrzeuglenker noch die allgemeine Geschwindigkeitsgrenze und gegebenenfalls davon abweichende und häufig auch wechselnde Geschwindigkeitsgrenzen beachten und sein Fahrzeug entsprechend betätigen, ohne daß er durch zu langsames Fahren zu einem Verkehrshindernis wird.

Aus der DE-A-36 12 691 ist eine Regeleinrichtung für die Geschwindigkeit von Fahrzeugen bekannt, bei der durch Sprachsignale des Fahrers verschiedene Steuersignale erzeugt werden können, um damit eine bestimmte Fahrzeugsollgeschwindigkeit aufzurufen oder die aktuelle Fahrzeugsollgeschwindigkeit zu verändern. Die Regeleinrichtung dient dazu, die vorgegebene Geschwindigkeit des Fahrzeuges zu regeln, d.h. auf dem vorgegebenen Geschwindigkeitswert zu halten, so lange keine äußeren Einflüsse wirken, die die Regeleinrichtung unwirksam machen. Der Fahrer kann jederzeit das Fahrzeug über die geregelte Sollgeschwindigkeit hinaus willkürlich beschleunigen und auf eine höhere Geschwindigkeit bringen. Erst dann, wenn der Fahrer den Betätigungshebel für die Fahrgeschwindigkeit freigegeben hat, kann die Regeleinrichtung das Fahrzeug wieder auf die zuletzt eingestellte Sollgeschwindigkeit bringen. Mit dieser Regeleinrichtung kann das beabsichtigte oder unbeabsichtigte Überschreiten einer Grenzgeschwindigkeit nicht verhindert werden. Die Regeleinrichtung umfaßt unteranderem eine Sprachsteuereinheit mit einem Mikrofon, einer Sprach- oder Lauterkennungseinheit, einem Mikrocomputer und einem Speicher. Der trainierbare Vorrat an erkennbaren Sprachbefehlen entspricht den üblichen Bedieneingaben einer Geschwindigkeitsregelvorrichtung.

Der Erfindung liegt die Aufgabe zugrunde, dem Fahrzeuglenker wenigstens das Einhalten der jeweils geltenden Geschwindigkeitsgrenze zu erleichtern. Diese Aufgabe wird durch ein Verfahren nach Anspruch 1 und durch eine Einrichtung nach Anspruch 10 gelöst.

Wenn ein Fahrzeuglenker die Einrichtung auf die für die vorgesehene Fahrstrecke geltende Geschwindigkeitsgrenze einstellen will, bringt er in einer Vorbereitungsphase sein Kraftfahrzeug auf die betreffende Geschwindigkeit, betätigt die Speichertaste der Einrichtung und äußert währenddessen ein der Geschwindigkeitsgrenze entsprechendes Sprachsignal. Vom Tonaufnehmer wird dieses Sprachsignal in ein entsprechendes Sprachwertsignal umgewandelt. Von dem Signalwandler für die Fahrgeschwindigkeit wird ein entsprechendes Geschwindigkeitssignal als Grenzwertsignal erzeugt. Beide Signale werden durch das Betätigen der Speichertaste in dem Signalspeicher der Einrichtung als einander zugeordnetes Signalpaar gespeichert. Wenn der Fahrzeuglenker sich dann der Hilfe der Einrichtung bedienen will, äußert er das der Grenzgeschwindigkeit entsprechende Sprachsignal, das er zuvor schon für die Speicherung geäußert hat. Das daraus vom Tonaufnehmer erzeugte sekundäre Sprachwertsignal wird in der Einrichtung vom ersten Komparator mit dem gespeicherten primären Sprachwertsignal verglichen, der bei Übereinstimmung ein Koinzidenzsignal erzeugt. Bei Koinzidenz der Sprachwertsignale vergleicht der zweite Komparator das gespeicherte Grenzwertsignal mit dem vom Signalwandler ständig gelieferten Geschwindigkeitssignal, d.h. mit dem Signal der Istgeschwindigkeit des Kraftfahrzeuges, und bildet daraus ein Differenzsignal. Bei einem negativen Differenzsignal, d.h. bei einer aktuellen Fahrzeuggeschwindigkeit, die über der Grenzgeschwindigkeit liegt, wird ein Betätigungssignal erzeugt, durch das ein Stellglied betätigt wird, das die Energiezufuhr zum Antriebsmotor des Kraftfahrzeuges so weit und so lange verringert, bis die Istgeschwindigkeit des Kraftfahrzeuges nicht mehr größer als die Grenzgeschwindigkeit ist. Das geschieht unabhängig davon, ob der Fahrzeuglenker bewußt durch eine entsprechende Betätigung des Gaspedals die Geschwindigkeit des Kraftfahrzeuges selbst auf einen Wert verringert, der nicht größer als die Grenzgeschwindigkeit ist. Auch ein absichtliches oder unabsichtliches stärkeres Betätigen des Gaspedals führt wegen des ständigen Wirkens der Einrichtung nicht zu einer Erhöhung der Fahrgeschwindigkeit über die eingegebene Grenzgeschwindigkeit hinaus. Unterhalb dieser Grenzgeschwindigkeit kann der Fahrzeuglenker die Istgeschwindigkeit seines Kraftfahrzeuges willkürlich wählen.

Vorteilhafte Ausgestaltungen der Erfindung sind in den Unteransprüchen zum Verfahren und in den Unteransprüchen der Einrichtung angegeben, die im folgenden gemeinsam erläutert werden.

Eine Ausgestaltung der Einrichtung nach Anspruch 11 ermöglicht es, in der Vorbereitungsphase mehrere Geschwindigkeitswerte als Grenzgeschwindigkeiten zu Speichern, und zwar jeweils zusammen mit dem zugehörigen Sprachwertsignal. Dadurch können im Bedarfsfalle mehrere unterschiedliche Grenzgeschwindigkeiten eingestellt werden, ohne daß das gespeicherte Signalpaar für jeden Einzelfall abgeändert werden muß. Das erleichtert es auch, nach einer geringeren Grenzgeschwindigkeit ohne weiteres auf eine höhere Grenzgeschwindigkeit überzugehen oder umgekehrt. Durch die höhere Anzahl von Speicherplätzen für Signalpaare ist es auch möglich, daß mehrere unterschiedliche Personen, die das Kraftfahrzeug gelegentlich oder ständig benutzen, ihre eigenen Sprachwertsignale zusammen mit den zugehörigen Grenzgeschwindigkeiten einspeichern und sie bei einem Fahrerwechsel ohne weiteren Vorbereitungsaufwand nutzen können.

Eine Ausgestaltung der Einrichtung nach Anspruch 12 verhindert, daß ein einzelnes gespeichertes Signalpaar oder eine ganze Gruppe von gespeicherten Signalpaaren versehentlich gelöscht oder überschrieben werden und das womöglich zunächst unbemerkt bleibt und erst später und unter ungünstigen Verhältnissen erkennbar wird.

Eine Ausgestaltung der Einrichtung nach Anspruch 13 ermöglicht es, die vorgesehenen Grenzgeschwindigkeiten durch einfaches Auswählen oder Abrufen zusammen mit den entsprechenden Sprachwertsignalen einzuspeichern. Dadurch können diese Speichervorgänge auch dann vorgenommen werden, wenn es nicht möglich oder nicht erwünscht ist, daß das Kraftfahrzeug jeweils auf die der vorgesehenen Grenzgeschwindigkeit entsprechende Istgeschwindigkeit gebracht werden muß, um das dabei erzeugte Geschwindigkeitssignal als Grenzwertsignal speichern zu können. Diese Speichervorgänge können sogar im Stillstand des Kraftfahrzeuges durchgeführt werden. Eine weitere Möglichkeit für diese Speichervorgänge eröffnet sich mit einer Weiterbildung der Einrichtung nach Anspruch 14.

Eine Ausgestaltung der Einrichtung nach Anspruch 16 ermöglicht es, auch während der Fahrt ein neues Signalpaar zu speichern, ohne daß dieser Speichervorgang die Einrichtung veranlaßt, in den aktuellen Fahrzustand einzugreifen. Das gleiche wird mit einer Ausgestaltung der Einrichtung nach Anspruch 17 erreicht. Bei einer alternativen Ausgestaltung der Einrichtung nach Anspruch 18 wird erreicht, daß zunächst einmal der vorgesehene Speichervorgang ordnungsgemäß abläuft und daß erst danach die Einrichtung entsprechend den Werten des gerade eingegebenen Signalpaares aktiv wird.

Mit einer nach Anspruch 19 ausgestalteten Einrichtung wird verhindert, daß beim Abrufen einer Grenzgeschwindigkeit, die über der Istgeschwindigkeit liegt, das Fahrzeug unwillkürlich beschleunigt, weil das Gaspedal sich noch in einer Betätigungsstellung befindet, die einer Geschwindigkeit entspricht, die über der zuvor gefahrenen Grenzgeschwindigkeit liegt. Aufgrund dieser Ausgestaltung muß der Fahrzeuglenker beim Wechseln der Grenzgeschwindigkeit zunächst das Gaspedal freigeben. Dadurch wird der Fahrzeuglenker darauf aufmerksam gemacht, daß er anschließend das Gaspedal bewußt nur in der Weise betätigt, die der aktuellen Verkehrssituation entspricht und daher das Kraftfahrzeug nicht unwillkürlich bis auf die für eine spätere Fahrstrecke vorgesehene Grenzgeschwindigkeit beschleunigt. Mit einer Weiterbildung der Einrichtung nach Anspruch 20 wird ein gesonderter Signalgeber für das Betätigungssignal eingespart.

Eine Ausgestaltung der Einrichtung nach Anspruch 21 ermöglicht es, ein Freigabesignal in der gleichen Weise wie die Grenzwertsignale einzuspeichern und es im Bedarfsfalle akustisch abzurufen und dadurch die gerade eingeschaltete Geschwindigkeitsbegrenzung aufzuheben, wenn sie nicht mehr erwünscht ist und auch nicht ein höherer Grenzwert eingeschaltet werden soll. Das gleiche wird mit einer Ausgestaltung der Einrichtung nach Anspruch 27 erreicht, wobei dann anstelle des akustischen Abrufes die Freigabetaste manuell betätigt wird.

Eine Ausgestaltung der Einrichtung nach Anspruch 22 und/oder Anspruch 23 ermöglicht es, das eine oder andere oder beide der gerade eingespeicherten Signale auf den richtigen Signalinhalt sowohl einzeln wie auch in Relation zueinander und auch den Speichervorgang selbst zu überprüfen. Eine Weiterbildung nach Anspruch 24 ermöglicht es, den Inhalt des Signalspeichers zu überprüfen, etwa um festzustellen, ob die vorgesehenen Grenzwertsignale schon vorhanden oder noch vorhanden sind, und um danach entscheiden zu können, ob sie geändert werden müssen oder ergänzt werden müssen. Das gleiche wird mit einer Weiterbildung nach Anspruch 25 erreicht.

Eine Ausgestaltung der Einrichtung nach Anspruch 26 gibt dem Fahrzeuglenker bei einem Wechsel von einer höheren Grenzgeschwindigkeit zu einer niedrigeren Grenzgeschwindigkeit einen akkustischen und/oder visuellen Hinweis darauf, daß das Kraftfahrzeug sich noch in dem Geschwindigkeitsbereich zwischen den beiden Grenzgeschwindigkeiten bewegt.

Mit einer Ausgestaltung der Einrichtung nach Anspruch 28 läßt sich auch die Speicherung eines Freigabesignals überprüfen.

Mit einer Ausgestaltung der Einrichtung nach Anspruch 29 lassen sich Geschwindigkeitsbeschränkungen auch von außerhalb des Kraftfahrzeuges auf die Einrichtung übertragen. Das erspart es dem Fahrzeuglenker, umvermutet auftretende Geschwindigkeitsbeschränkungen visuell erfassen zu müssen und sie während der Fahrt in die Einrichtung einzugeben. Das kann vor allem dann eine große Erleichterung bedeuten, wenn an der betreffenden Stelle gerade eine Verkehrssituation herrscht, die die volle Aufmerksamkeit des Kraftfahrzeuglenkers in Anspruch nimmt. Das kann sowohl bei einer ständig eingerichteten Geschwindigkeitsbeschränkung wie auch bei vorübergehend eingerichteten Geschwindigkeitsbeschränkungen, wie z.B. bei Straßenbaustellen, der Fall sein.

In der Praxis kann die Einrichtung in unterschiedlichen Ausgesaltungsstufen verwendet werden. Danach richtet sich dann auch das Verfahren bei ihrer Anwendung. Soweit alternative Ausgestaltungen angegeben sind, können sie alternativ verwendet werden oder, in beschränktem Umfange, auch nebeneinander verwendet werden. Im letzten Falle ist darauf zu achten, daß die Bedienung der Einrichtung so einfach wie möglich bleibt und Irritationen des Fahrzeuglenkers vermieden werden.

## Patentansprüche

1. Verfahren zur Begrenzung der Geschwindigkeit eines Kraftfahrzeuges mit den Verfahrensschritten:
- in einer Vorbereitungsphase
- - wird beim Fahren mit einer ausgewählten Geschwindigkeit ein der gewählten Geschwindigkeit entsprechendes Sprachsignal geäußert,
- - wird das Sprachsignal mittels eines Tonaufnehmers in ein primäres elektronisches Sprachwertsignal umgewandelt und
- - wird von einem Signalwandler ein der gewählten Geschwindigkeit entsprechendes Geschwindigkeitssignal als Grenzwertsignal erzeugt,
- - wird durch Betätigen einer Speichertaste sowohl das primäre Sprachwertsignal wie auch das Grenzwertsignal in einem Signalspeicher in Relation zueinander als Signalpaar gespeichert,
- zur Anwendung der Geschwindigkeitsbegrenzung während einer Fahrt
- - wird ein der gewählten Grenzgeschwindigkeit entsprechendes Sprachsignal geäußert,
- - wird dieses Sprachsignal mittels des Tonaufnehmers in ein sekundäres Sprachwertsignal umgewandelt,
- - wird das sekundäre Sprachwertsignal einer Steuerungsvorrichtung zugeführt und in einem ersten Komparator mit dem primären Sprachwertsignal verglichen und bei Übereinstimmung der beiden Sprachwertsignale ein Koinzidenzsignal erzeugt,
- - wird bei Koinzidenz in einem zweiten Komparator das Grenzwertsignal mit dem der gefahrenen Geschwindigkeit entsprechenden Istgeschwindigkeitssignal verglichen und daraus ein Differenzsignal gebildet und
- - wird bei einem negativen Differenzsignal ein Betätigungssignal erzeugt, mittels dessen ein die Energiezufuhr zum Antriebsmotor verringerndes Stellglied betätigt wird.

2. Verfahren nach Anspruch 1,
**gekennzeichnet** durch die Verfahrensschritte:
- in der Vorbereitungsphase
- - werden beim Fahren mit mehreren ausgewählten Geschwindigkeiten je ein der gewählten Geschwindigkeit entsprechendes Sprachsignal geäußert,
- - wird jedes Sprachsignal mittels eines Tonaufnehmers in ein primäres elektronisches Sprachwertsignal umgewandelt und
- - wird von einem Signalwandler je ein der gewählten Geschwindigkeit entsprechendes Geschwindigkeitssignal als Grenzwertsignal erzeugt,
- - wird jeweils durch Betätigen einer Speichertaste sowohl das primäre Sprachwertsignal wie auch das zugehörige Grenzwertsignal in einem Signalspeicher in Relation zueinander als Signalpaar gespeichert.

3. Verfahren nach Anspruch 1 oder 2,
**gekennzeichnet** durch den Verfahrensschritt:
- die ausgewählten Grenzwertsignale werden von einem manuell betätigbaren Signalgeber aufgrund manueller Einstellung erzeugt.

4. Verfahren nach einem der Ansprüche 1 bis 3,
**gekennzeichnet** durch den Verfahrensschitt:
- beim Betätigen der Speichertaste zum Speichern des betreffenden Signalpaares wird ein Inaktivierungssignal erzeugt, das vorübergehend die Komparatoren der Steuervorrichtung inaktiviert.

5. Verfahren nach einem der Ansprüche 1 bis 3,
**gekennzeichnet** durch die Verfahrensschritte:
- zu Beginn der Vorbereitungsphase wird ein Stellschalter auf die Stellung "Speichern" eingestellt, womit die Signalleitungen zu den Komparatoren der Steuervorrichtung unterbrochen werden,
- nach Abschluß der Vorbereitungsphase wird der Stellschalter wieder auf die Stellung "Betrieb" umgestellt.

6. Verfahren nach einem der Ansprüche 1 bis 3,
**gekennzeichnet** durch den Verfahrensschritt:
- beim Betätigen der Speichertaste zum Speichern des betreffenden Signalpaares wird das primäre Sprachwertsignal zugleich auch in einem gesonderten Speicher gespeichert und erst nach dem Loslassen der Speichertaste aus diesem Speicher als sekundäres Sprachwertsignal an die Steuervorrichtung weitergeleitet.

7. Verfahren nach einem der Ansprüch 1 bis 6,
**gekennzeichnet** durch die Verfahrensschritte:
- durch das sekundäre Sprachwertsignal oder durch das von ihm ausgelöste Koinzidenzsignal wird ein Sicherheitssignal erzeugt, das ein Betätigungssignal auslöst, mittels dessen das die Energiezufuhr zum Antriebsmotor beeinflussende Stellglied in Richtung einer Verringerung der Energiezufuhr betätigt wird,
- vor oder nach dem Äußern des der gewählten Geschwindigkeit entsprechenden Sprachsignals wird das Gaspedal des Fahrzeuges in Richtung der Leerlaufstellung freigegeben und kurz vor oder bei dem Erreichen der Leerlaufstellung durch einen mit dem Gaspedal gekoppelten Signalgeber ein Lösesignal erzeugt, das der Steuervorrichtung zugeführt wird und das dort die Wirkung des Sicherheitssignals aufhebt.

8. Verfahren nach Anspruch 7,
**gekennzeichnet** durch die Verfahrensschritte:
- in der Vorbereitungsphase
- - wird ein Freigabe-Sprachsignal geäußert,
- - wird dieses Sprachsignal mittels des Tonaufnehmers in ein Freigabesignal umgewandelt,
- - wird durch Betätigen einer gesonderten Speichertaste dieses Signal als primäres Freigabesignal zusammen mit einem Geschwindigkeitssignal, das der höchstmöglichen oder einer darüberliegenden Geschwindigkeit des Fahrzeuges entspricht als Signalpaar in dem Signalspeicher gespeichert,
- bei der Anwendung der Geschwindigkeitsbegrenzung
- - wird zum Wechseln der Grenzgeschwindigkeit das Freigabe-Sprachsignal geäußert,
- - wird dieses Signal mittels des Tonaufnehmers in ein sekundäres Freigabesignal umgewandelt,
- - wird dieses sekundäre Freigabesignal der Steuervorrichtung zugeführt und in einem Komparator mit dem primären Freigabesignal verglichen und bei Übereinstimmung der beiden Signale ein zweites Koinzidenzsignal erzeugt,
- - wird durch das zweite Koinzidenzsignal in der Steuervorrichtung die Wirkung des ersten Koinzidenzsignals aufgehoben.

9. Verfahren nach einem der Ansprüche 1 bis 8,
**gekennzeichnet** durch die Verfahrensschritte:
- mittels einer Empfangsvorrichtung wird ein von einem stationären Signalsender ausgesandtes externes Steuersignal aufgenommen,
- das externe Steuersignal wird
- - sowohl zu einem Grenzwertsignal verarbeitet, das dem zweiten Komparator mit Vorrang vor einem anderen Grenzwertsignal zugeleitet wird,
- - wie auch zu einem Koinzidenzsignal verarbeitet, das den zweiten Komparator zum Bilden eines Differenzsignals aktiviert.

10. Einrichtung zum Durchführen des Verfahrens nach Anspruch 1 mit den Merkmalen:
- es ist ein Tonaufnehmer vorhanden, der ausgewählte Sprachsignale in entsprechende Sprachwertsignale umwandelt,
- es ist ein erster Signalgeber vorhanden, der ein der Geschwindigkeit des Kraftfahrzeuges entsprechendes Geschwindigkeitssignal erzeugt,
- es ist ein Signalspeicher vorhanden,
- - der zwei Signaleingänge aufweist und
- - der bei seiner Aktivierung ein am einen Signaleingang anstehendes Signal und das am anderen Signaleingang anstehendes Signal in Relation zueinander als Signalpaar speichert,
- an den einen Signaleingang des Speichers ist der Tonaufnehmer angeschlossen und an dem anderen Signaleingang ist der erste Signalgeber angeschlossen,
- es ist eine Speichertaste zum Erzeugen eines Speichersignals vorhanden, das den Signalspeicher aktiviert zum Einspeichern eines Signalpaares aus dem an seinem ersten Signaleingang anstehenden Sprachwertsignal als primäres Sprachwertsignal und aus dem an seinem zweiten Signaleingang anstehenden Geschwindigkeitssignal als Grenzwertsignal,
- es ist eine Steuerungsvorrichtung mit einem ersten Komparator vorhanden,
- - der ein vom Tonaufnehmer aus einem ausgewählten Sprachsignal erzeugtes sekundäres Sprachwertsignal mit dem im Signalspeicher gespeicherten primären Sprachwertsignal vergleicht und
- - der bei Übereinstimmung der miteinander verglichenen Sprachwertsignale ein Koinzidenzsignal erzeugt,
- in der Steuerungsvorrichtung ist ein zweiter Komparator vorhanden,
- - der das vom ersten Signalgeber erzeugte aktuelle Geschwindigkeitssignal als Istgeschwindigkeitssignal mit dem im Signalspeicher gespeicherten Grenzwertsignal vergleicht und
- - der bei einem Koinzidenzsignal des ersten Komparators aus den beiden miteinander verglichenen Geschwindigkeitssignalen ein Differenzsignal erzeugt,
- die Steuerungsvorrichtung erzeugt bei einem negativen Differenzsignal ein Betätigungssignal,
- es ist ein Stellglied vorhanden, das beim Auftreten eines Betätigungssignals der Steuervorrichtung die Energiezufuhr zum Antriebsmotor des Kraftfahrzeuges verringert.

11. Einrichtung nach Anspruch 10,
**gekennzeichnet** durch das Merkmal:
- der Signalspeicher weist Speicherplätze für mehrere Signalpaare auf, die beim wiederholten Betätigen der Speichertaste nacheinander einspeicherbar sind.

12. Einrichtung nach Anspruch 11,
**gekennzeichnet** durch das Merkmal:
- es ist eine Sicherungsvorrichtung vorhanden, die wahlweise ein einzelnes Signalpaar oder eine Gruppe von Signalpaaren gegen Löschen oder Überschreiben absichert.

13. Einrichtung nach einem der Ansprüche 10 bis 12,
**gekennzeichnet** durch das Merkmal:
- es ist ein manuell betätigbarer Signalgeber vorhanden, der einzeln einstellbare Geschwindigkeitssignale erzeugt oder vorgegebene Geschwindigkeitssignale abruft, die als Grenzwertsignale dem zweiten Speichereingang des Signalspeichers zugeleitet werden.

14. Einrichtung nach Anspruch 13,
**gekennzeichnet** durch die Merkmale:
- der manuell betätigbare Signalgeber ist mit einem Signalspeicher für eines oder für mehrere Geschwindigkeitssignale ausgerüstet,
- vorzugsweise ist dieser Signalspeicher an den ersten Signalgeber angeschlossen und mit einer Speichertaste versehen, die das aktuelle Geschwindigkeitssignal des ersten Signalgebers in diesen Signalspeicher einspeichert.

15. Einrichtung nach Anspruch 14,
**gekennzeichnet** durch das Merkmal:
- es ist eine Sicherungsvorrichtung für den Speicher des manuell betätigbaren Signalgebers vorhanden, mittels der wahlweise ein einzelnes Geschwindigkeitssignal oder eine Gruppe von Geschwindigkeitssignalen gegen Löschen oder Überschreiben abgesichert wird.

16. Einrichtung nach einem der Ansprüche 10 bis 15
**gekennzeichnet** durch die Merkmale:
- mit der Speichertaste ist ein Signalgeber für ein Inaktivierungssignal gekoppelt,
- in der Steuerungsvorrichtung ist ein Relais mit Ruhekontakten vorhanden,
- - dessen Erregerwicklung an den Signalgeber für ein Inaktivierungssignal angeschlossen ist und
- - dessen Ruhekontakte in die Signaleingänge der Komparatoren eingeschaltet sind.

17. Einrichtung nach einem der Ansprüche 10 bis 15,
**gekennzeichnet** durch das Merkmal:
- es ist ein Stellschalter vorhanden,
- - der auf die Schaltstellungen "Speichern" und "Betrieb" einstellbar ist,
- - der Schaltglieder aufweist, die in der Schaltstellung "Speichern" offen sind und die in die Signaleingangsleitungen der Komparatoren eingeschaltet sind.

18. Einrichtung nach einem der Ansprüche 10 bis 15,
**gekennzeichnet** durch die Merkmale:
- es ist ein gesonderter Signalspeicher vorhanden,
- - dessen Signaleingang parallel zu dem einen Signaleingang des ersten Signalspeichers an den Tonaufnehmer angeschlossen ist und
- - dessen Signalausgang an den Signaleingang des ersten Komparators angeschlossen ist,
- der gesonderte Speicher wird durch das Betätigen der Speichertaste des ersten Signalspeichers für die Signalaufnahme aktiviert und durch das Loslassen der Speichertaste für die Signalabgabe aktiviert.

19. Einrichtung nach einem der Ansprüche 10 bis 18,
**gekennzeichnet** durch die Merkmale:
- es ist eine Sicherheitsvorrichtung vorhanden,
- - die durch ein Sicherheitssignal aktiviert wird und
- - die einen Signalgeber für ein Betätigungssignal aufweist, das das Stellglied zur Verringerung der Energiezufuhr zum Antriebsmotor des Kraftfahrzeuges betätigt,
- die Sicherheitsvorrichtung weist einen weiteren Signalgeber auf, der mit dem Gaspedal des Kraftfahrzeuges in der Weise gekoppelt ist, daß er beim Freigeben des Gaspedals kurz vor Erreichen oder beim Erreichen der Leerlaufstellung ein Lösesignal erzeugt, das die Wirkung des Sicherheitssignals aufhebt und die Sicherheitsvorrichtung wieder inaktiviert,
- bevorzugt wird aufgrund eines sekundären Sprachwertsignals oder eines von ihm ausgelösten Koinzidenzsignals des ersten Komparators ein Sicherheitssignal erzeugt oder eines dieser Signale selbst als Sicherheitssignal benutzt.

20. Einrichtung nach Anspruch 19,
**gekennzeichnet** durch das Merkmal:
- anstelle eines eigenen Signalgebers für ein Betätigungssignal wird der betreffende Signalgeber der Steuerungsvorrichtung durch das Sicherheitssignal aktiviert.

21. Einrichtung nach einen der Ansprüche 10 bis 20,
**gekennzeichnet** durch die Merkmale:
- es ist eine gesonderte Speichertaste vorhanden, die ein aufgrund eines "Freigabe"-Sprachsignals vom Tonaufnehmer erzeugtes Freigabesignal zusammen mit einem besonderen Grenzwertsignal als Signalpaar im Signalspeicher speichert,
- als besonderes Grenzwertsignal wird ein Geschwindigkeitssignal genutzt, das der höchstmöglichen Geschwindigkeit des Kraftfahrzeuges oder einer darüberliegenden Geschwindigkeit entspricht.

22. Einrichtung nach einem der Ansprüche 10 bis 21,
**gekennzeichnet** durch das Merkmal:
- es ist eine Wiedergabevorrichtung mit einem Lautsprecher vorhanden,
- - die durch das Loslassen der Speichertaste im Anschluß an einen Speichervorgang vorübergehend aktiviert ist und
- - mittels der das zuletzt gespeicherte Sprachsignal über den Lautsprecher wiederholt wird.

23. Einrichtung nach einem der Ansprüche 10 bis 22,
**gekennzeichnet** durch das Merkmal:
- es ist eine Anszeigevorrichtung mit einem Display vorhanden,
- - die durch das Loslassen der Speichertaste im Anschluß an einen Speichervorgang vorübergehend aktiviert wird und
- - die das zuletzt eingespeicherte Grenzwertsignal im Display anzeigt.

24. Einrichtung nach Anspruch 22 und/oder 23,
**gekennzeichnet** durch das Merkmal:
- die Speichertaste ist auf eine gesonderte "Wiedergabe"-Stellung einstellbar, in der die Wiedergabevorrichtung und/oder die Anszeigevorrichtung aktiviert ist zum Wiedergeben des aktuellen Sprachsignals bzw. zum Anzeigen des aktuellen Grenzwertsignals.

25. Einrichtung nach Anspruch 22 und/oder 23,
**gekennzeichnet** durch das Merkmal:
- es ist eine gesonderte Wiedergabetaste vorhanden, die die Wiedergabevorrichtung und/oder die Anzeigevorrichtung aktiviert zum Wiedergeben des aktuellen Sprachsignals bzw. zum Anzeigen des aktuellen Grenzwertsignals.

26. Einrichtung nach einem der Ansprüche 22 bis 25,
**gekennzeichnet** durch das Merkmal:
- die Steuervorrichtung ist mit einem weiteren (dritten) Komparator ausgerüstet,
- - an dessen einem Signaleingang die Signalleitung mit dem aktuellen Grenzwertsignal angeschlossen ist,
- - an dessen anderem Signaleingang die Signalleitung für das durch ein entsprechendes Sprachsignal gerade abgerufene neue Grenzwertsignal angeschlossen ist und
- - der beim Wechsel von einer höheren zu einer niedrigeren Grenzgeschwindigkeit die Wiedergabevorrichtung und/oder die Anzeigevorrichtung in der Weise aktiviert, daß das neue Sprachsignal in kurzen Abständen so lange wiederholt bzw. das neue Grenzwertsignal blinkend so lange angezeigt wird, bis die Istgeschwindigkeit des Kraftfahrzeuges nicht mehr größer als die neue Grenzgeschwindigkeit ist.

27. Einrichtung nach einem der Ansprüche 10 bis 26,
**gekennzeichnet** durch das Merkmal:
- es ist eine Freigabetaste vorhanden, die das aktuelle Grenzwertsignal oder das Koinzidenzsignal ausschaltet.

28. Einrichtung nach Anspruch 27,
**gekennzeichnet** durch das Merkmal:
- die Freigabetaste aktiviert die Wiedergabevorrichtung und/oder die Anzeigevorrichtung zum Wiedergeben eines "Frei"-Sprachsignals bzw. zum Anzeigen einer neutralen Geschwindigkeitsangabe, vorzugsweise der Angabe "0 km".

29. Einrichtung nach einem der Ansprüche 10 bis 28,
**gekennzeichnet** durch die Merkmale:
- es ist eine Empfangsvorrichtung zum Empfangen externer Steuersignale vorhanden,
- es ist eine Auswerteschaltung vorhanden, die ein empfangenes externes Steuersignal
- - sowohl in ein Grenzwertsignal umwandelt, das dem zweiten Komparator mit Vorrang vor anderen Grenzwertsignalen zugeleitet wird,
- - wie auch in ein Koinzidenzsignal umwandelt, das dem zweiten Komparator zugeleitet wird.

## Claims

1. A method of limiting the speed of a motor vehicle having the method steps:
- in a preparation phase
-- when travelling at one selected speed a voice signal corresponding to the selected speed is spoken,
-- the voice signal is converted into a primary electronic speech-value signal by means of a sound recorder and
-- a speed signal corresponding to the selected speed is generated as a threshold-value signal by a signal converter,
-- by actuating a memory key both the primary speech-value signal and the threshold-value signal are stored in a signal memory as a pair of signals in relation to each other,
- in order to use the speed limitation during a journey
-- a voice signal corresponding to the selected limit speed is spoken,
-- this voice signal is converted into a secondary speech-value signal by means of the sound recorder,
-- the secondary speech-value signal is fed to a control device and is compared in a first comparator with the primary speech-value signal and if the two speech-value signals coincide a coincidence signal is generated,
-- in the event of coincidence the threshold-value signal is compared in a second comparator with the actual-speed signal corresponding to the speed travelled and a difference signal is formed therefrom, and
-- in the case of a negative difference signal an actuating signal is generated, by means of which a control member which reduces the energy supply to the drive motor is actuated.

2. A method according to Claim 1, **characterized by** the method steps:
- in the preparation phase
-- when travelling at a plurality of selected speeds one respective voice signal corresponding to the selected speeds is spoken in each case,
-- each voice signal is converted into a primary electronic speech-value signal by means of a sound recorder and
-- a respective speed signal corresponding to the selected speed is generated as a threshold-value signal in each case by a signal converter,
-- by actuating a memory key in each case both the primary speech-value signal and the associated threshold-value signal are stored in a signal memory as a pair of signals in relation to each other.

3. A method according to Claim 1 or 2, **characterized by** the method step:
- the selected threshold-value signals are generated by a manually actuable signal transmitter on the basis of manual adjustment.

4. A method according to one of Claims 1 to 3, **characterized by** the method step:
- when actuating the memory key for storing the respective pair of signals a deactivating signal is generated, which momentarily deactivates the comparators of the control device.

5. A method according to one of Claims 1 to 3, **characterized by** the method steps:
- at the beginning of the preparation phase a switch is set to the "store" setting, so that the signal lines to the comparators of the control device are interrupted,
- after the end of the preparation phase the switch is set back again to the "operation" setting.

6. A method according to one of Claims 1 to 3, **characterized by** the method step:
- when actuating the memory key for storing the respective pair of signals the primary speech-value signal is also stored at the same time in a separate memory and is passed on as a secondary speech-value signal from this memory to the control device only after the memory key is released.

7. A method according to one of Claims 1 to 6, **characterized by** the method steps:
- the secondary speech-value signal or the coincidence signal triggered thereby generates a safety signal which triggers an actuating signal, by means of which the control member controlling the energy supply to the drive motor is actuated in the direction of reducing the energy supply,
- before or after the voice signal corresponding to the selected speed is spoken the accelerator pedal of the vehicle is released in the direction of the idling position, and shortly before or on reaching the idling position a signal transmitter coupled to the accelerator pedal generates a disengagement signal which is fed to the control device and which discontinues the action of the safety signal.

8. A method according to Claim 7, **characterized by** the method steps:
- in the preparation phase
-- a release voice signal is spoken,
-- the said voice signal is converted into a release signal by means of the sound recorder,
-- by actuating a separate memory key the said signal as a primary release signal is stored together with a speed signal - which corresponds to the maximum or a higher speed of the vehicle - as a pair of signals in the signal memory,
- when using the speed limitation
-- the release voice signal is spoken in order to change the limiting speed,
-- the said signal is converted into a secondary release signal by means of the sound recorder,
-- the said secondary release signal is fed to the control device and is compared in a comparator with the primary release signal and if the two signals coincide a second coincidence signal is generated,
-- the action of the first coincidence signal is discontinued by the second coincidence signal in the control device.

9. A method according to one of Claims 1 to 8, **characterized by** the method steps:
- an external control signal emitted by a stationary signal transmitter is received by means of a receiver device,
- the external control signal is
-- both processed to form a threshold-value signal which is fed to the second comparator with precedence over another threshold-value signal
-- and processed to form a coincidence signal which activates the second comparator so as to form a difference signal.

10. A device for performing the method according to Claim 1 with the features:
- a sound recorder is present, which converts selected voice signals into corresponding speech-value signals,
- a first signal transmitter is present, which generates a speed signal corresponding to the speed of the motor vehicle,
- a signal memory is present,
-- which has two signal inputs and
-- which when activated stores a signal occurring at one signal input and the signal occurring at the other signal input as a pair of signals in relation to each other,
- the sound recorder is connected to one signal input of the memory and the first signal transmitter is connected to the other signal input,
- a memory key for generating a memory signal is present, which activates the signal memory so as to store a pair of signals from the speech-value signal occurring at its first signal input as a primary speech-value signal and from the speed signal occurring at its second signal input as a threshold-value signal,
- a control device is present with a first comparator,
-- which compares a secondary speech-value signal generated by the sound recorder from a selected voice signal with the primary speech-value signal stored in the signal memory and
-- which generates a coincidence signal when the speech-value signals compared with each other coincide,
- in the control device a second comparator is present,
-- which compares the current speed signal generated by the first signal transmitter as the actual-speed signal with the threshold-value signal stored in the signal memory and
-- which generates a difference signal from the two speed signals compared with each other in the case of a coincidence signal of the first comparator,
- the control device generates an actuating signal in the case of a negative difference signal,
- a control member is present, which reduces the energy supply to the drive motor of the motor vehicle when an actuating signal of the control device occurs.

11. A device according to Claim 10, **characterized by** the feature:
- the signal member is provided with memory locations for a plurality of pairs of signals which can be stored in succession with repeated actuation of the memory key.

12. A device according to Claim 11, **characterized by** the feature:
- a safety device is present, which optionally protects an individual pair of signals or a group of pairs of signals from being erased or overwritten.

13. A device according to one of Claims 10 to 12, **characterized by** the feature:
- a manually actuable signal transmitter is present which generates individually settable speed signals or recalls pre-set speed signals which are fed as threshold-value signals to the second memory input of the signal memory.

14. A device according to Claim 13, **characterized by** the features:
- the manually actuable signal transmitter is provided with a signal memory for one or a plurality of speed signals,
- the said signal memory is preferably connected to the first signal transmitter and is provided with a memory key which stores the current speed signal of the first signal transmitter in the said signal memory.

15. A device according to Claim 14, **characterized by** the feature:
- a safety device for the memory of the manually actuable signal transmitter is present, by means of which an individual speed signal or a group of speed signals is optionally prevented from being erased or overwritten.

16. A device according to one of Claims 10 to 15, **characterized by** the features:
- a signal transmitter for a deactivation signal is coupled to the memory key,
- a relay with breaking contacts is present in the control device,
-- the excitation winding of the said relay is connected to the signal transmitter for a deactivation signal and
-- the breaking contacts of the said relay are connected to the signal inputs of the comparators.

17. A device according to one of Claims 10 to 15, **characterized by** the feature:
- a switch is present,
-- which can be set to the switching settings "store" and "operation",
-- which is provided with switching elements which are open in the "store" switching setting and which are connected to the signal input lines of the comparators.

18. A device according to one of Claims 10 to 15, **characterized by** the features:
- a separate signal memory is present,
-- the signal input of which is connected to the sound recorder in parallel with one signal input of the first signal memory and
-- the signal output of which is connected to the signal input of the first comparator,
- the separate memory is activated by actuating the memory key of the first signal memory for receiving the signal and is activated by releasing the memory key for the signal delivery.

19. A device according to one of Claims 10 to 18, **characterized by** the features:
- a safety device is present,
-- which is activated by a safety signal and
-- which is provided with a signal transmitter for an actuating signal which actuates the control member for reducing the energy supply to the drive motor of the motor vehicle,
- the safety device is provided with a further signal transmitter which is coupled to the accelerator pedal of the motor vehicle in such a way that when the accelerator pedal is released shortly before reaching or on reaching the idling position it generates a disengagement signal which discontinues the action of the safety signal and deactivates the safety device again,
- on the basis of a secondary speech-value signal or a coincidence signal - emitted thereby - of the first comparator a safety signal is preferably generated or one of these signals is itself used as a safety signal.

20. A device according to Claim 19, **characterized by** the feature:
- instead of a separate signal transmitter for an actuating signal the respective signal transmitter of the control device is activated by the safety signal.

21. A device according to one of Claims 10 to 20, **characterized by** the features:
- a special memory key is present, by means of which a release signal generated by the sound recorder on the basis of a "release" speech-value signal can be stored together with a special threshold-value signal as a pair of signals in the signal memory,
- a speed signal, which corresponds to the maximum speed of the motor vehicle or a higher speed, is used as a special threshold-value signal.

22. A device according to one of Claims 10 to 21, **characterized by** the feature:
- a reproduction device with a loudspeaker is present,
-- which is momentarily activated by releasing the memory key following a storage procedure and
-- by means of which the voice signal stored last is repeated by way of the loud-speaker.

23. A device according to one of Claims 10 to 22, **characterized by** the feature:
- a display device with a display is present,
-- which is momentarily activated by releasing the memory key following a storage procedure and
-- which displays the threshold-value signal stored last in the display.

24. A device according to Claim 22 and/or 23, **characterized by** the feature:
- the memory key can be set to a separate "reproduction" setting in which the reproduction device and/or the display device is activated in order to reproduce the current voice signal or to display the current threshold-value signal.

25. A device according to Claim 22 and/or 23, **characterized by** the feature:
- a separate reproduction key is present, which activates the reproduction device and/or the display device in order to reproduce the current voice signal or to display the current threshold-value signal.

26. A device according to one of Claims 22 to 25, **characterized by** the feature:
- the control device is provided with a further (third) comparator,
-- to one signal input of which the signal line with the current threshold-value signal is connected,
-- to the other signal input of which the signal line for the new threshold-value signal just recalled by a corresponding voice signal is connected, and
-- which when changing from a higher to a lower threshold speed activates the reproduction device and/or the display device in such a way that the new voice signal is repeated at short intervals or the new threshold-value signal is displayed flashing until the actual speed of the motor vehicle is no longer greater than the new threshold speed.

27. A device according to one of Claims 10 to 26, **characterized by** the feature:
- a release key is present which switches off the current threshold-value signal or the coincidence signal.

28. A device according to Claim 27, **characterized by** the feature:
- the release key activates the reproduction device and/or the display device in order to reproduce a "free" voice signal and to display a neutral speed display, preferably the information "0 km", respectively.

29. A device according to one of Claims 10 to 28, **characterized by** the feature:
- a receiving device for receiving external control signals is present,
- an evaluation circuit is present which converts an external control signal received
-- both into a threshold-value signal which is fed to the second comparator with precedence over other threshold-value signals,
-- and into a coincidence signal which is fed to the second comparator.

## Revendications

1. Procédé pour limiter la vitesse d'un véhicule automobile comprenant les étages suivantes :
- dans une phase préparatoire,
* pour une vitesse sélectionnée, le conducteur prononce un signal vocal correspondant à la vitesse sélectionnée,
* le signal vocal est converti par un micro en un signal de valeur vocale électronique primaire et,
* un convertisseur de signal génère comme signal de valeur limite, un signal de vitesse correspondant à la vitesse sélectionnée,
* par actionnement d'une touche de mémoire, le signal de valeur vocale primaire et le signal de valeur limite sont mémorisés dans une mémoire de signal, en relation l'un avec l'autre comme une paire de signaux,
- pour appliquer la limitation de vitesse pendant le déplacement,
* on exprime un signal vocal correspondant à la vitesse limite sélectionnée,
* ce signal vocal est converti en un signal de valeur vocale secondaire par le micro,
* le signal vocal secondaire est fourni à un dispositif de commande et un premier comparateur le compare au signal de valeur vocale primaire et en cas de concordance des deux signaux de valeur vocale, il génère un signal de coïncidence,
* en cas de coïncidence, un second comparateur compare le signal de valeur limite au signal de vitesse réelle correspondant à la vitesse utilisée et forme un signal de différence,
* en cas de signal de différence négatif, il génère un signal de manoeuvre qui met en oeuvre un actionneur diminuant l'alimentation en énergie du moteur.

2. Procédé selon la revendication 1,
caractérisé par les étapes de procédé suivantes :
- dans la phase préparatoire,
* si pendant le déplacement, avec plusieurs vitesses sélectionnées, un signal vocal correspondant à la vitesse sélectionnée est exprimé,
* chaque signal vocal est converti en un signal de valeur vocale électronique primaire par un micro,
* il est transformé par un générateur de signal chaque fois en un signal de vitesse correspondant au signal de valeur limite, pour le signal de vitesse sélectionnée et,
* par la manoeuvre d'une touche de mémoire, on mémorise à la fois le signal de valeur vocale primaire et le signal de valeur limite correspondant dans une mémoire de signal, en relation respective comme paire de signaux.

3. Procédé selon la revendication 1 ou 2,
caractérisé par l'étape de procédé suivante :
- les signaux de valeur limite sélectionnée sont générés par un capteur de signal actionné manuellement, grâce à un réglage manuel.

4. Procédé selon l'une des revendications 1 à 3,
caractérisé par l'étape suivante :
- en actionnant la touche de mémoire pour mémoriser la paire de signaux correspondants, on génère un signal de neutralisation qui neutralise provisoirement les comparateurs du dispositif de commande.

5. Procédé selon l'une des revendications 1 à 3,
caractérisé par les étapes de procédé suivantes :
- au début de la phase de préparation, on règle un commutateur de réglage sur la position "mémorisation" pour couper les lignes de signaux vers les comparateurs du dispositif de commande,
- à la fin de la phase préparatoire, on commute de nouveau le commutateur de réglage sur la position "mode de fonctionnement".

6. Procédé selon l'une des revendications 1 à 3,
caractérisé par l'étape de procédé suivante :
- à l'actionnement de la touche de mémorisation pour mémoriser la paire de signaux concernée, on mémorise le signal de valeur vocale primaire en même temps dans une mémoire particulière et ce n'est que lorsqu'on libère la touche de mémoire que ce signal est transmis de la mémoire au dispositif de commande comme signal de valeur vocale secondaire.

7. Procédé selon l'une des revendications 1 à 6,
caractérisé par les étapes de procédé suivantes :
- avec le signal de valeur vocale secondaire ou le signal de coïncidence qu'il déclenche, on génère un signal de sécurité qui déclenche un signal de manoeuvre à l'aide duquel on actionne un actionneur influençant l'alimentation en énergie du moteur dans le sens d'une réduction de cette alimentation en énergie,
- avant ou après l'émission du signal vocal correspondant à la vitesse choisie, la pédale d'accélérateur du véhicule est libérée dans le sens du fonctionnement au ralenti et peu avant ou lorsqu'on atteint la position de ralenti, un générateur de signal couplé à la pédale d'accélérateur déclenche un signal de libération qui est fourni au dispositif de commande pour y neutraliser l'effet du signal de sécurité.

8. Procédé selon la revendication 7,
caractérisé par les étapes de procédé suivantes :
- dans la phase préparatoire :
* on émet un signal vocal de libération,
* on convertit ce signal vocal en un signal de libération par le micro,
* par actionnement d'une touche de mémoire particulière, ce signal est mémorisé comme signal de libération primaire avec un signal de vitesse correspondant à la vitesse maximale possible ou à une vitesse supérieure du véhicule comme paire de signaux dans la mémoire de signal,
- en appliquant la limitation de vitesse,
* pour changer la vitesse limite, on exprime le signal vocal de libération,
* ce signal est converti en un signal de libération secondaire par le micro,
* ce signal de libération secondaire est fourni au dispositif de commande et est comparé dans un comparateur au signal de libération primaire et en cas de concordance des deux signaux, on génère un second signal de coïncidence,
* avec le second signal de coincidence, on neutralise l'effet du premier signal de coincidence dans le dispositif de commande.

9. Procédé selon l'une des revendications 1 à 8,
caractérisé par les étapes de procédé suivantes :
- à l'aide d'un dispositif de réception, on reçoit un signal de commande externe émis par un émetteur de signal stationnaire,
- ce signal de commande externe est,
* traité à la fois pour donner un signal de valeur limite transmis au second comparateur avec priorité par rapport à un autre signal de valeur limite,
* il est également traité comme un signal de coïncidence qui active le second comparateur pour former un signal de différence.

10. Installation pour la mise en oeuvre du procédé selon la revendication 1 comportant les caractéristiques suivantes :
- un micro qui convertit les signaux vocaux sélectionnés en des signaux de valeur vocale correspondants,
- un premier générateur de signal qui génère un signal de vitesse correspondant à la vitesse du véhicule,
- une mémoire de signal,
* à deux entrées de signaux et,
* qui lors de son activation mémorise un signal appliqué à une entrée de signal et le signal appliqué à l'autre entrée de signal, en relation entre eux comme paire de signaux,
- un micro est relié à une entrée de signal de la mémoire et l'autre entrée de signal est reliée au premier générateur de signal,
- une touche de mémoire pour générer un signal de mémorisation qui active la mémoire de signal pour mémoriser une paire de signaux formée du signal de valeur vocale appliqué à la première entrée de signal comme signal de valeur vocale primaire et le signal de vitesse appliqué à la seconde entrée de signal comme signal de valeur limite,
- un dispositif de commande avec un premier comparateur,
* qui compare un signal de valeur vocale secondaire généré par le micro à partir du signal vocal sélectionné à un signal de valeur vocale primaire enregistré dans la mémoire de signal et,
* qui en cas de concordance des signaux de valeur vocale comparés entre eux, génère un signal de coïncidence,
- le dispositif de commande comporte un second comparateur,
* qui compare le signal de vitesse actuelle généré par le premier générateur de signal comme signal de vitesse réelle et le signal de valeur limite mis en mémoire dans la mémoire de signal et,
* pour un signal de coïncidence du premier comparateur, il génère un signal de différence à partir des deux signaux de vitesse, comparés,
- le dispositif de commande génère un signal de manoeuvre en cas de signal de différence négatif,
- un actionneur qui lorsque se produit un signal de manoeuvre du dispositif de commande diminue l'alimentation en énergie du moteur du véhicule.

11. Installation selon la revendication 10,
caractérisée par la caractéristique suivante :
- la mémoire de signal comporte des emplacements de mémoire pour plusieurs paires de signaux qui sont mémorisés successivement par un actionnement répété de la touche de mémoire.

12. Installation selon la revendication 11,
caractérisée par la caractéristique suivante :
- un dispositif de sécurité qui protège sélectivement une seule paire de signaux ou un groupe de paires de signaux contre l'effacement ou la surcharge.

13. Installation selon l'une des revendications 10 à 12,
caractérisée par la caractéristique suivante :
- un générateur de signal à commande manuelle qui génère les différents signaux de vitesse réglables ou appelle des signaux de vitesse prédéterminés fournis comme signaux de valeur limites a la seconde entrée de mémoire de la mémoire de signal.

14. Installation selon la revendication 13,
caractérisée par les caractéristiques suivantes :
- le générateur de signal à commande manuelle est équipé d'une mémoire de signal pour un ou plusieurs signaux de vitesse,
- cette mémoire de signal est de préférence reliée au premier générateur de signal et comporte une touche de mémoire qui mémorise le signal de vitesse actuel du premier générateur de signal dans la mémoire de signal.

15. Installation selon la revendication 14,
caractérisée par la caractéristique suivante :
- un dispositif de sécurité pour la mémoire du générateur de signal à commande manuelle qui protège sélectivement un seul signal de vitesse ou un groupe de signaux de vitesse contre l'effacement ou la surcharge.

16. Installation selon l'une des revendications 10 à 15,
caractérisée par les caractéristiques suivantes :
- une touche de mémoire est couplée à un générateur de signal pour un signal de neutralisation,
- le dispositif de commande comporte un relais avec des contacts de repos,
* dont la bobine d'excitation est reliée au générateur de signal pour un signal de neutralisation et,
- dont les contacts de repos sont branchés aux entrées de signaux des comparateurs.

17. Installation selon l'une des revendications 10 à 15,
caractérisée par la caractéristique suivante :
- un commutateur d'actionnement ,
* qui peut se régler sur les positions "mémoire" et "fonctionnement" ,
* comportant des éléments de commutation ouverts en position "mise en mémoire" et qui sont branchés dans les lignes d'entrée de signaux des comparateurs.

18. Installation selon l'une des revendications 10 à 15,
caractérisée par les caractéristiques suivantes :
- une mémoire de signal particulière,
* dont l'entrée de signal est reliée en parallèle à l'entrée de signal de la première mémoire de signal sur le micro et,
* dont la sortie de signal est reliée à l'entrée de signal du premier comparateur,
- la mémoire particulière est activée par l'actionnement de la touche de mémoire de la première mémoire de signal pour la réception de signal, la libération de la touche de mémoire activant l'émission de signal.

19. Installation selon l'une des revendications 10 à 18,
caractérisée par les caractéristiques suivantes
- un dispositif de sécurité activé par un signal de sécurité et,
* qui comporte un générateur de signal pour un signal de mise en oeuvre qui met en oeuvre l'organe d'actionnement pour diminuer l'alimentation en énergie du moteur du véhicule,
- le dispositif de sécurité comporte un autre générateur de signal couplé à la pédale d'accélérateur du véhicule de façon, qu'en libérant la pédale d'accélérateur, peu avant d'atteindre ou lorsqu'on atteint le ralenti, il génère un signal de déclenchement qui supprime l'effet du signal de sécurité et ne traduise de nouveau le dispositif de sécurité,
- de manière préférentielle, un signal de valeur vocale secondaire ou un signal de coïncidence déclenché par le premier comparateur donne un signal de sécurité ou utilise ces signaux et même comme signal de sécurité.

20. Installation selon la revendication 19,
caractérisée par la caractéristique suivante :
- à la place d'un générateur de signal propre pour un signal de mise en oeuvre, on active le générateur de signal concerné du dispositif de commande par le signal de sécurité.

21. Installation selon l'une des revendications 10 à 20,
caractérisée par les caractéristiques suivantes :
- une touche de mémoire particulière à l'aide de laquelle avec un signal vocal de libération provenant du signal de libération généré par le micro en même temps qu'un signal de valeur limite particulière sont mis en mémoire comme paire de signaux dans la mémoire de signal,
- comme signal de valeur limite particulière, on utilise un signal de vitesse qui correspond à la vitesse la plus élevée possible du véhicule ou à une vitesse supérieure.

22. Installation selon l'une des revendications 10 à 21,
caractérisée par la caractéristique suivante :
- un dispositif de reproduction avec un haut-parleur,
* qui est activé transitoirement par la libération de la touche de mémoire en liaison avec une opération de mise en mémoire et,
* qui répète par le haut-parleur le signal de mémoire enregistré en dernier lieu.

23. Installation selon l'une des revendications 10 à 22,
caractérisée par la caractéristique suivante :
- un dispositif d'affichage avec un afficheur,
* qui est activé transitoirement par la libération de la touche de mémoire en liaison avec une opération de mémorisation et,
* qui indique dans l'afficheur le dernier signal de valeur limite mis en mémoire.

24. Installation selon la revendication 22 et/ou 23,
caractérisée par la caractéristique suivante :
- la touche de mémoire se règle sur une position particulière "reproduction" pour laquelle le dispositif de reproduction et/ou le dispositif d'affichage sont activés pour reproduire le signal vocal actuel ou pour afficher le signal de valeur limite actuel.

25. Installation selon la revendication 22 et/ou 23,
caractérisée par la caractéristique suivante :
- une touche de reproduction particulière qui active le dispositif de reproduction et/ou le dispositif d'affichage pour reproduire le signal vocal actuel ou afficher le signal de valeur limite actuel.

26. Installation selon l'une des revendications 22 à 25,
caractérisée par la caractéristique suivante :
- le dispositif de commande est équipé d'un autre comparateur (troisième comparateur),
* dont une entrée de signal est reliée à la ligne de signal correspondant au signal de valeur limite actuel,
* dont l'autre entrée de signal est reliée à la ligne de signal pour le nouveau signal de valeur limite appelé précisément pour un signal vocal correspondant,
* en cas de changement d'une vitesse limite haute à une vitesse limite plus faible, le dispositif de reproduction et/ou le dispositif d'affichage est activé de façon que le nouveau signal vocal soit répété à de courts intervalles ou que le nouveau signal de valeur limite soit affiché en clignotant jusqu'à ce que la vitesse réelle du véhicule ne dépasse plus la nouvelle vitesse limite.

27. Installation selon l'une des revendications 10 à 26,
caractérisée par la caractéristique suivante :
- une touche de libération qui exclut le signal de valeur limite actuel ou le signal de coïncidence.

28. Installation selon la revendication 27,
caractérisée par la caractéristique suivante :
- la touche de libération active le dispositif de reproduction et/ou le dispositif d'affichage pour reproduire un signal vocal "libre" ou pour afficher une indication de vitesse neutre de préférence l'indication " 0 km/h".

29. Installation selon l'une des revendications 10 à 28,
caractérisée par les caractéristiques suivantes :
- un dispositif de réception pour recevoir des signaux de commande externes,
- un circuit d'exploitation qui reçoit un signal de commande externe pour
* le convertir à la fois en un signal de valeur limite qui est transmis au second comparateur avec priorité par rapport aux signaux de valeur limite,
* qui est également converti en un signal de coïncidence fourni au second comparateur.
